# EUROPÄISCHE PATENTSCHRIFT

(11) **EP 0 545 345 B1**
(45) Veröffentlichungstag und Bekanntmachung des Hinweises auf die Patenterteilung: **06.03.1996**
(21) Anmeldenummer: 92120440.0
(22) Anmeldetag: 30.11.1992
(51) Int. Cl.: G01G 19/415, G01D 1/16, G07G 1/14

(54) **Preisanzeigende elektronische Vorrichtung**
Electronic price indicating apparatus
Appareil électronique pour indiquer le prix

(30) Priorität: 29.11.1991 DE 4139493
(43) Veröffentlichungstag der Anmeldung: 09.06.1993
(73) Patentinhaber: Mettler-Toledo (Albstadt) GmbH, D-72458 Albstadt (DE)
(72) Erfinder: Wallisch, Gebhard, Dipl.Ing. (FH), W-7453 Burladingen (DE)
(74) Vertreter: Patentanwälte Leinweber & Zimmermann

(56) Entgegenhaltungen:
- DE-A- 3 518 119
- GB-A- 2 088 599
- PATENT ABSTRACTS OF JAPAN vol. 6, no. 212 (P-151)(1090) 26. Oktober 1982 & JP-A-57 117 063
- PATENT ABSTRACTS OF JAPAN vol. 12, no. 415 (P-781)(3262) 4. November 1988 & JP-A-63 153 665

## Beschreibung

Die Erfindung bezieht sich auf eine preisanzeigende elektronische Vorrichtung für den Verkauf von einzelnen Waren aus einer Anzahl verschiedener Waren, mit einer Wägezelle zur Bildung eines dem Gewicht der zu verkaufenden Ware entsprechenden elektrischen Ausgangssignals, einer Speichereinrichtung zur Speicherung von zu den einzelnen Waren gehörende, auf eine Gewichtseinheit bezogene Verkaufsgrundpreise darstellenden Daten, einer Eingabetastatur zur Eingabe einer die jeweils zu verkaufende Ware identifizierenden Information, einer eine numerische Anzeigeeinheit für das Gewicht der Ware und den dazugehörigen Verkaufspreis aufweisenden Sichtanzeigeeinrichtung und einer mit der Wägezelle, der Speichereinrichtung, der Tastatur und der Sichtanzeigeeinrichtung verbundenen Verarbeitungseinrichtung, die in Abhängigkeit vom Ausgangssignal der Wägezelle und der auf der Tastatur eingegebenen Identifikationsinformation zum Bilden eines Gewichtswertes und des dem Gewichtswert entsprechenden Verkaufspreises sowie zum Ansteuern der numerischen Anzeigeeinheit zur Darstellung des Gewichtswertes und des Verkaufspreises betreibbar ist.

Bekannte Einrichtungen oder preisrechnende Waagen dieser Art ermöglichen also eine automatische Ermittlung des einer zu verkaufenden Ware entsprechenden Verkaufspreises aufgrund der mittels der Tastatur eingegebenen Identifikationsinformation und zeigen diesen auf der Sichtanzeigeeinrichtung an. Dadurch wird die für einen Verkaufsvorgang erforderliche Information, nämlich der Verkaufspreis, selbsttätig ermittelt und angezeigt. Als die die Ware identifizierende Information dienen insbesondere die im Handel allgemein verwendeten Artikelnummern, die in der Fachsprache auch als PLU-Nummern (Price-look-up) bekannt sind.

Im Handel ist jedoch die zukünftige Entwicklung absehbar, daß eine Ausweitung im bisherigen Umfang nicht mehr möglich ist, so daß das Bestreben besteht, die vorhandenen Märkte ertragreicher zu gestalten. Es wäre daher wünschenswert, dem Verkaufspersonal bei jedem Verkaufsvorgang auch eine ertragsbezogene Information zur Hand zu geben, um es im Rahmen seiner Einflußmöglichkeiten zur Förderung des Absatzes ertragreicherer Waren zu motivieren. Mit den bekannten preisrechnenden Waagen , die lediglich den Verkaufspreis, das Gewicht und gegebenenfalls das Umsatzdatum ermitteln, ist dies aber nicht möglich. Zur Lösung dieses Problems wurde auf dem Gebiet der Registierkassen vorgeschlagen, auf der Sichtanzeige derartiger Vorrichtung neben dem Verkaufspreis auch noch den Einkaufspreis der einzelnen Wasen anzuseigen (vgl. JP-A-57-117063).

Der Erfindung liegt die Aufgabe zugrunde, eine elektronische Vorrichtung der eingangs genannten Art dahingehend weiterzubilden, daß sie dem Verkaufspersonal bei jedem Verkaufsvorgang gleichzeitig auch eine echse den Verkauf im Hinblick auf den Ertrag bewertende, Information liefert.

Erfindungsgemäß wird diese Aufgabe dadurch gelöst, daß in der Speichereinrichtung die zu den einzelnen Waren gehörenden Einkaufsgrundpreise darstellende Daten als weitere Daten gespeichert sind, die Verarbeitungseinrichtung ferner eine Einrichtung zur Bildung der Differenz zwischen dem Verkaufsgrundpreis und dem Einkaufsgrundpreis sowie eine Einrichtung zum Vergleichen der Differenz mit mindestens einem vorgegebenen Schwellwert aufweist zur Bildung eines eine Bewertung des durch den Verkauf der betreffenden Ware erzielten Vorteils darstellenden Signals in Form eines das Vergleichsergebnis anzeigenden Ausgangssignals der Vergleichseinrichtung und die Sichtanzeigeeinrichtung eine von der elektronischen Verarbeitungseinrichtung zur sichtbaren Darstellung des Bewertungssignals angesteuerte weitere Anzeigeeinheit aufweist.

Bei der erfindungsgemäß ausgebildeten Vorrichtung erfolgt also auf der weiteren Anzeigeeinheit nach der Eingabe der Identifikationsinformation, beispielsweise der Artikelnummer, mittels der Tastatur die Darstellung des Bewertungssignals. Das Verkaufspersonal sieht daher bei jedem Verkaufsvorgang, ob dieser für das Unternehmen gewinnbringend ist. Bei den üblicherweise mehreren hundert Verkaufsvorgängen pro Tag gewinnt damit der Verkäufer bzw. die Verkäuferin durch die sichtbare Darstellung des Bewertungssignals eine Einschätzung dafür, ob die ausgeübte Verkaufstätigkeit gewinnbringend ist. Da das Bewertungssignal nur eine Anzeige dafür darstellt, ob der Verkaufsvorgang mehr oder weniger gewinnbringend ist, brauchen Zahlen über die Spanne zwischen Verkaufs- und Einkaufspreis nicht bekanntgegeben zu werden.

Da preisrechnende elektronische Ladenwaagen der eingangs beschriebenen Art ohnehin mit der Speichereinrichtung zur Speicherung der Verkaufsgrundpreise ausgestattet sind, läßt sich die erfindungsgemäße Weiterbildung leicht an herkömmlichen elektronischen Ladewaagen verwirklichen, an denen nur die Sichtanzeigeeinrichtung durch die weitere Anzeigeeinheit ergänzt und im übrigen nur der Betriebsablauf der Verarbeitungseinrichtung und die Inhalte der Speichereinrichtung derart angepaßt werden müssen, daß das Bewertungssignal gebildet werden kann. Die erfindungsgemäß weitergebildete Ladenwaage zeichnet sich damit durch einen einfachen Aufbau aus.

Die bei der erfindungsgemaßen Vorrichtung gebildete Differenz zwischen dem Verkaufsgrundpreis und dem Einkaufsgrundpreis stellt den sogenannten Deckungsbeitrag dar. Durch den Schwellwertvergleich wird der Deckungsbeitrag hinsichtlich seiner Höhe klassifiziert und liefert damit die gewünschte Bewertung. Werden beispielsweise zwei Schwellwerte vorgegeben, so kann der Bereich der unterhalb des ersten Schwellwertes verbleibenden Deckungsbeiträge als nicht ertragreich, der zwischen dem ersten und dem zweiten Schwellwert liegende Bereich als mäßig ertragreich und der oberhalb des zweiten Schwellwertes liegende Bereich als stark ertragreich eingestuft werden.

In einer zweckmäßigen weiteren Ausgestaltung der erfindungsgemaßen Vorrichtung ist vorgesehen, daß die weitere Anzeigeeinheit eine der Anzahl der durch die Schwellwerte begrenzten Intervalle entsprechende Anzahl von optischen Indikatoren aufweist, von denen jeweils der dem durch das Vergleichsergebnis ausgewählten Intervall entsprechende zur Anzeige angesteuert wird. Hierbei entspricht also dem unterhalb dem niedrigsten Schwellwert liegenden Intervall, den zwischen den Schwellwerten liegenden Intervallen sowie dem oberhalb dem höchsten Schwellwert liegenden Intervall jeweils ein getrennter optischer Indikator auf der Sichtanzeigeeinrichtung, wodurch eine sehr anschauliche Darstellung der Bewertung des jeweiligen Verkaufsvorgangs erhalten wird.

Insbesondere ist es dabei vorteilhaft, daß die Indikatoren durch Leuchtanzeiger von unterschiedlicher Lichtfarbe gebildet sind. Sofern dabei zwei Schwellwerte vorgesehen sind, könnte beispielsweise besonders anschaulich für das unterhalb des niedrigsten Schwellwertes liegende Intervall die Anzeige der Lichtfarbe rot, entsprechend nicht ertragreich, für das nächsthöhere Intervall die Anzeige der Lichtfarbe gelb, entsprechend mäßig ertragreich, und für das höchstgelegene Intervall die Anzeige der Lichtfarbe grün, entsprechend stark ertragreich, vorgesehen sein.

Ein anderer Gedanke der Erfindung liegt darin, eine preisrechnende elektronische Ladenwaage, bei der eine Bildung und Speicherung von über eine bestimmte Menge von Verkaufsvorgängen summierten Umsätzen aus Verkaufspreisen vorgesehen ist, dahingehend weiterzubilden, daß ein auf die summierten Umsätze bezogenes Bewertungssignal gebildet und die weitere Anzeigeeinheit zur Darstellung des summenbezogenen Bewertungssignals ansteuerbar ist.

Beispielsweise können in diesen Vorrichtungen die Umsätze nach Verkäuferumsätzen, Warengruppenumsätzen, Artikelumsätzen und dergleichen geführt sein. Aus diesen Daten lassen sich dann die Deckungsbeiträge in unterschiedlichen Verdichtungsstufen, beispielsweise pro Verkäufer, Abteilung, Warengruppe, Artikel und dergleichen über einen bestimmten Zeitraum errechnen. Die Darstellung des summenbezogenen Bewertungssignals auf der Anzeigeeinheit liefert also dem Markt- oder Abteilungsleiter auf einen Blick eine Aussage, ob im betreffenden Zeitraum, beispielsweise in einem Tag, einer Woche, einem Monat oder auch einem Jahr die über die Ladenwaage abgewickelten Verkaufsvorgänge hinsichtlich der Ertragslage erfolgreich waren.

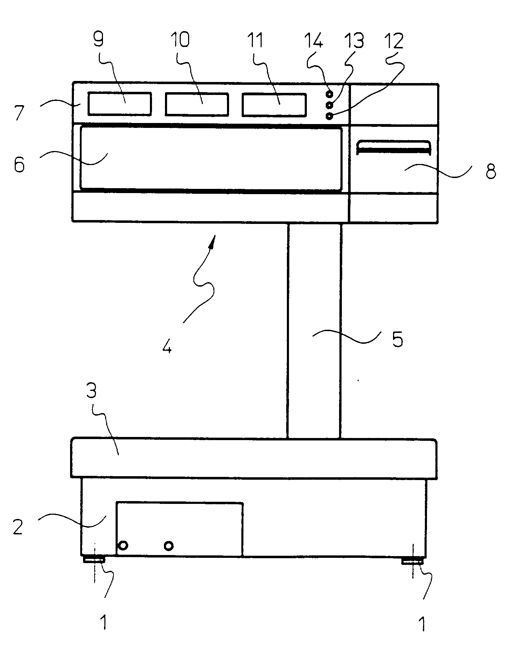

Weitere Merkmale, Einzelheiten und Vorteile der Erfindung ergeben sich aus der folgenden Beschreibung anhand des Beispiels einer elektronischen Ladenwaage, in der auf die Zeichnung Bezug genommen ist.

Gemäß der einzigen Figur der Zeichnung weist eine elektronische Ladenwaage eine in einem mit Standfüßen 1 zur Abstützung auf einer Unterlage versehenen Gehäuse 2 angeordnete Wägezelle auf, auf der eine zur Aufnahme zu wiegender Waren dienende Wägeplattform 3 abgestützt ist. Aus der von der Wägeplattform 3 auf die Wägezelle übertragenen Gewichtskraft der zu wiegenden Ware bildet die Wägezelle ein dem Gewicht entsprechendes elektrisches Ausgangssignal.

Eine Auswerteeinrichtung 4 ist mittels einer an ihrem unteren Ende am Gehäuse 2 angeordneten Tragsäule 5 in einem Abstand oberhalb der Wägeplattform 3 abgestützt. Die Auswerteeinrichtung 4 weist eine in der Zeichnung nur schematisch dargestellte, gegenüber der Zeichnungsebene zum Betrachter von oben nach unten hin nach vorne geneigte Eingabetastatur 6 und oberhalb der Eingabetastatur 6 eine Sichtanzeigeeinrichtung 7 auf. Ferner ist in der Auswerteeinrichtung 4 eine elektronische Speichereinrichtung und eine elektronische Verarbeitungseinrichtung vorgesehen, die sowohl mit der Speichereinrichtung, der Eingabetastatur 6, der Sichtanzeigeeinrichtung 7 als auch über ein längs der Tragsäule 5 in deren Innerem geführtes Verbindungskabel mit der Wägezelle verbunden ist. Ferner ist in dem dargestellten Ausführungsbeispiel mit der Auswerteeinrichtung 4 ein Drucker 8 integriert.

In der Speichereinrichtung ist für jede Ware, in der Fachsprache als "Artikel" oder "PLU" bezeichnet, der auf eine Gewichtseinheit, beispielsweise ein Kilogramm, bezogene Verkaufsgrundpreis abgespeichert. Beim Wägevorgang wird mittels der Eingabetastatur 6 eine die Ware identifizierende Information, beispielsweise eine Artikel- oder PLU-Nummer eingegeben, woraus die elektronische Verarbeitungseinrichtung, der auch das den Gewichtswert darstellende elektrische Ausgangssignal der Wägezelle zugeht, den dem von der Wägezelle erfaßten Gewichtswert entsprechenden Verkaufspreis der gewogenen Ware bildet. Die Sichtanzeigeeinrichtung 7 weist eine numerische Anzeigeeinheit, beispielsweise aus 7-Segment-Anzeigeelementen oder Punktmatrix-Anzeigeelemente auf, die in drei mehrstellige Anzeigefelder 9, 10, 11 unterteilt ist, von denen das erste Anzeigefeld 9 von der elektronischen Verarbeitungseinrichtung beim Wägevorgang zur Anzeige des ermittelten Gewichtswertes, das zweite Anzeigefeld 10 zur Anzeige des durch die Eingabe der PLU-Nummer auf der Eingabetastatur 6 in der Speichereinrichtung angewählten Verkaufsgrundpreises und das dritte Anzeigefeld 11 zur Anzeige des von der Verarbeitungseinrichtung errechneten Verkaufspreises angesteuert wird. Die auf den Anzeigefeldern 9, 10, 11 angezeigten Daten können auf dem von der elektronischen Verarbeitungseinrichtung angesteuerten Drucker 8 ausgedruckt werden.

In der Speichereinrichtung ist zusätzlich zu den jeweiligen Verkaufsgrundpreisen auch der Einkaufsgrundpreis eingespeichert. Wenn beim Wägevorgang auf der Eingabetastatur 6 die der gerade zu wiegenden Ware entsprechende Identifikationsinformation angegeben worden ist, bildet eine in der Verarbeitungseinrichtung vorgesehene Einrichtung die Differenz zwischen dem Verkaufsgrundpreis und dem Einkaufsgrundpreis, also den Deckungsbeitrag, um dadurch eine Bewertung des Verkaufsvorganges hinsichtlich des Ertrags vorzunehmen. Im einzelnen wird zu diesem Zweck in einer in der Verarbeitungseinrichtung vorgesehenen Vergleichereinrichtung mindestens ein Schwellwert voreingestellt, im dargestellten Ausführungsbeipiel zwei Schwellwerte, mit denen die gebildete Differenz verglichen wird. Dadurch stellt das Ausgangssignal der Vergleichereinrichtung ein Bewertungssignal für die Ertragsfähigkeit des jeweiligen Verkaufsvorgangs dar.

An der Sichtanzeigeeinrichtung 7 ist zur sichtbaren Darstellung des Bewertungssignals eine weitere Anzeigeeinheit vorgesehen, die in dem dargestellten Ausführungsbeispiel 3 Leuchtanzeiger 12, 13, 14, beispielsweise in der Form von Leuchtdioden, aufweist. Solange das Bewertungssignal anzeigt, daß die Differenz zwischen Verkaufsgrundpreis und Einkaufsgrundpreis, also der Deckungsbeitrag, kleiner als der untere der beiden vorgegebenen Schwellwerte des Vergleichers ist, steuert die Verarbeitungseinrichtung den eine rote Lichtfarbe aufweisenden Leuchtanzeiger 12 zur Anzeige an. Liegt dagegen der Deckungsbeitrag zwischen den beiden Schwellwerten, wird der eine gelbe Lichtfarbe aussendende Leuchtanzeiger 13 angesteuert. Erreicht oder überschreitet der Deckungsbeitrag den oberen Schwellwert, erfolgt die Ansteuerung des eine grüne Lichtfarbe aussendenden Leuchtanzeigers 14. Die weitere Anzeigeeinheit mit den Leuchtanzeigern 12, 13 und 14 vermittelt daher durch ihre optischen Signale dem Verkaufspersonal eine Information über die Ertragsfähigkeit des jeweiligen Verkaufsvorgangs, in dem es die Deutung der Lichtfarben rot, gelb und grün als "nicht ertragreich", "mäßig ertragreich" bzw. "stark ertragreich" beim Verkaufspersonal auslöst. Damit hat das Verkaufspersonal einen unmittelbaren Eindruck von der Wirtschaftlichkeit seiner Verkaufstätigkeit für das Unternehmen und wird dementsprechend in seinem Verhalten bei der Verkaufstätigkeit motiviert.

Die in der Auswerteeinrichtung 4 vorgesehene Speichereinrichtung erlaubt auch die Abspeicherung von über eine Anzahl von Verkaufsvorgängen summierten Umsätzen, die beispielsweise nach Verkäufern, Warengruppen und dergleichen Kriterien getrennt erfaßt und abgespeichert werden können.Auch kann diese Erfassung und Abspeicherung für unterschiedliche Zeiträume, beispielsweise einen Tag, eine Woche, einen Monat oder ein Jahr erfolgen. Statt der Bewertung der einzelnen Verkaufsvorgänge kann dann die Bewertung der summierten Umsätze in der gleichen Weise erfolgen, indem beispielsweise die in diesen summierten Umsätzen enthaltenen summierten Deckungsbeiträge mit summierten Schwellwerten verglichen werden. Die solchermaßen summenbezogenen Bewertungssignale können dann anstelle der auf die einzelnen Wägevorgänge bezogenen Bewertungssignale auf den Leuchtanzeigern 12, 13, 14 zur Darstellung gebracht werden, so daß Führungspersonal, beispielsweise Abteilungsleiter, sich einen sofortigen Überblick über den Erfolg der gesamten Verkaufstätigkeit verschaffen kann.

## Patentansprüche

1. Preisanzeigende elektronische Vorrichtung für den Verkauf von einzelnen Waren aus einer Anzahl verschiedener Waren, mit einer Wägezelle zur Bildung eines dem Gewicht der zu verkaufenden Ware entsprechenden elektrischen Ausgangssignals, einer Speichereinrichtung zur Speicherung von zu den einzelnen Waren gehörende, auf eine Gewichtseinheit bezogene Verkaufsgrundpreise darstellenden Daten, einer Eingabetastatur zur Eingabe einer die jeweils zu verkaufende Ware identifizierenden Information, einer eine numerische Anzeigeeinheit für das Gewicht der Ware und den dazugehörigen Verkaufspreis aufweisenden Sichtanzeigeeinrichtung und einer mit der Wägezelle, der Speichereinrichtung, der Tastatur und der Sichtanzeigeeinrichtung verbundenen Verarbeitungseinrichtung, die in Abhängigkeit vom Ausgangssignal der Wägezelle und der auf der Tastatur eingegebenen Identifikationsinformation zum Bilden eines Gewichtswertes und des dem Gewichtswert entsprechenden Verkaufspreises sowie zum Ansteuern der numerischen Anzeigeeinheit zur Darstellung des Gewichtswertes und des Verkaufspreises betreibbar ist, dadurch gekennzeichnet, daß in der Speichereinrichtung die zu den einzelnen Waren gehörenden Einkaufsgrundpreise darstellende Daten als weitere Daten gespeichert sind, die Verarbeitungseinrichtung ferner eine Einrichtung zur Bildung der Differenz zwischen dem Verkaufsgrundpreis und dem Einkaufsgrundpreis sowie eine Einrichtung zum Vergleichen der Differenz mit mindestens einem vorgegebenen Schwellwert aufweist zur Bildung eines eine Bewertung des durch den Verkauf der betreffenden Ware erzielten Vorteils darstellenden Signals in Form eines das Vergleichsergebnis anzeigenden Ausgangssignals der Vergleichseinrichtung und die Sichtanzeigeeinrichtung (7) eine von der elektronischen Verarbeitungseinrichtung zur sichtbaren Darstellung des Bewertungssignals angesteuerte weitere Anzeigeeinheit (12, 13, 14) aufweist.

2. Vorrichtung nach Anspruch 1, dadurch gekennzeichnet, daß die weitere Anzeigeeinheit (12, 13, 14) eine der Anzahl der durch die Schwellwerte begrenzten Intervalle entsprechende Anzahl von optischen Indikatoren aufweist, von denen jeweils der dem durch das Vergleichsergebnis ausgewählten Intervall entsprechende zur Anzeige angesteuert wird.

3. Vorrichtung nach Anspruch 2, dadurch gekennzeichnet, daß die Indikatoren durch Leuchtanzeiger (12, 13, 14) von unterschiedlicher Lichtfarbe gebildet sind.

4. Vorrichtung nach einem der Ansprüche 1 bis 3, bei der eine Bildung und Speicherung von über eine bestimmte Menge von Verkaufsvorgängen summierten Umsätzen aus Verkaufspreisen vorgesehen ist, dadurch gekennzeichnet, daß ein auf die summierten Umsätze bezogenes Bewertungssignal gebildet und die weitere Anzeigeeinheit (12, 13, 14) zur Darstellung des summenbezogenen Bewertungssignals ansteuerbar ist.

## Claims

1. Price-displaying electronic device for selling individual goods from a number of different goods, having a weighing cell for forming an electrical output signal corresponding to the weight of the goods to be sold, a storage device for storing data representing basic sale prices related to a unit of weight and belonging to the individual goods, an input keyboard for entering information identifying the goods to be sold in each case, a visual display device having a numerical display unit for the weight of the goods and the associated sale price and a processing device connected to the weighing cell, the storage device, the keyboard and the visual display device which can be operated in relation to the output signal from the weighing cell and the identification information entered on the keyboard to form a weight value and the sale price corresponding to the weight value and to activate the numerical display unit to represent the weight value and the sale price, characterised in that the data representing the basic purchase prices belonging to the individual goods are stored in the storage device as further data, the processing device also has a device for forming the difference between the basic sale price and the basic purchase price and a device for comparing the difference with at least one preset threshold value in order to form a signal, in the form of an output signal from the comparison device displaying the comparison result, representing an evaluation of the advantage obtained by selling the goods concerned, and the visual display device (7) has a further display unit (12, 13, 14) activated by the electronic processing device to provide a visual representation of the evaluation signal.

2. Device according to claim 1, characterised in that the further display unit (12, 13, 14) has a number of optical indicators corresponding to the number of intervals delimited by the threshold values, in each case the optical indicator corresponding to the interval selected by the comparison result being activated to display.

3. Device according to claim 2, characterised in that the indicators are formed by luminous displays (12, 13, 14) having different light colours.

4. Device according to one of claims 1 to 3, in which the turnovers from sale prices, totalled over a certain number of selling operations, are formed and stored, characterised in that an evaluation signal related to the totalled turnovers is formed and the further display unit (12, 13, 14) can be activated to represent the total-related evaluation signal.

## Revendications

1. Appareil électronique indiquant les prix pour la vente de marchandises prises isolément parmi une pluralité de marchandises diverses, comportant une cellule de pesée pour la formation d'un signal de sortie électrique correspondant au poids de la marchandise à vendre, une mémoire pour le stockage de données afférentes aux différentes marchandises et présentant des prix de base de vente rapportés à une unité de poids, un clavier d'entrée pour l'entrée d'une information identifiant la marchandise respective à vendre, une console de visualisation présentant une unité d'affichage numérique pour le poids de la marchandise et le prix de vente spécifique et un dispositif de traitement relié à la cellule de pesée, à la mémoire, au clavier et à la console de visualisation, dispositif qui peut être exploité en fonction du signal de sortie de la cellule de pesée et de l'information d'identification introduite sur le clavier pour former une valeur de poids et le prix de vente correspondant à la valeur du poids et pour commander l'unité d'affichage numérique pour représenter la valeur du poids et le prix de vente, caractérisé en ce que, dans la mémoire, sont stockées les données représentant les prix de base d'achat correspondant aux différentes marchandises comme autres données, le dispositif de traitement présente également un système pour former la différence entre le prix de base de vente et le prix de base d'achat et un système pour comparer la différence avec au moins une valeur seuil prédéfinie, pour former un signal représentant une évaluation de l'avantage obtenu par la vente de la marchandise concernée sous la forme d'un signal de sortie, indiquant le résultat de la comparaison, de l'appareil de comparaison et la console de visualisation (7) présente une autre unité d'affichage (12, 13, 14) commandée par le dispositif de traitement électronique pour la représentation visuelle du signal d'évaluation.

2. Appareil selon la revendication 1, caractérisé en ce que l'autre unité d'affichage (12, 13, 14) présente un certain nombre d'indicateurs optiques correspondant au nombre des intervalles limités par les valeurs seuils, indicateurs dont celui correspondant à l'intervalle sélectionné par le résultat de la comparaison est commandé pour l'affichage.

3. Appareil selon la revendication 2, caractérisé en ce que les indicateurs sont formés par des voyants lumineux (12, 13, 14) de différentes couleurs.

4. Appareil selon l'une quelconque des revendications 1 à 3, sur lequel on prévoit l'établissement et le stockage des ventes totalisées sur une quantité déterminée de processus de vente à partir de prix de vente, caractérisé en ce qu'un signal d'appréciation se forme en fonction des ventes totalisées et que l'autre unité d'affichage (12, 13, 14) est commandable pour représenter le signal d'appréciation rapporté à la totalisation.
